Europäisches Patentamt

European Patent Office

Office européen des brevets

(19)

(11) EP 0 932 019 A2

(12) **EUROPÄISCHE PATENTANMELDUNG**

(43) Veröffentlichungstag:
28.07.1999 Patentblatt 1999/30

(51) Int Cl.⁶: **G01B 7/30**, G01D 5/16

(21) Anmeldenummer: 99100690.9

(22) Anmeldetag: 14.01.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 22.01.1998 DE 19802381

(71) Anmelder: Cherry GmbH
91275 Auerbach (DE)

(72) Erfinder: Vogl, Günter
92249 Vilseck (DE)

(74) Vertreter: Fleuchaus, Leo, Dipl.-Ing. et al
Melchiorstrasse 42
81479 München (DE)

(54) **Drehpositionssensor mit Drehwahlscheibe**

(57) Die Erfindung betrifft einen Drehpositionssensor mit einem Sensor (6) und einer Drehwahlscheibe (2), auf der ein Magnet (4) angebracht ist, wobei mit der Drehung der Drehwahlscheibe (2) die Orientierung des durch den Magneten erzeugten Magnetfelds relativ zum Sensor (7) verändert wird und im Sensor ein von der Orientierung des Magnetfelds relativ zum Sensor abhängiges elektrisches Signal erzeugt wird.

Um einen im wesentlichen feldrichtungsempfindlichen, aber gegenüber durch Justagefehler oder durch Temperaturänderungen bedingten Feldstärkeschwankungen unempfindlichen Sensor zu haben, wird dabei als Sensor ein GMR-(giant magneto resistance)-Sensor verwendet.

Fig. 1

**Beschreibung**

Die vorliegende Erfindung betrifft einen Drehpositionssensor nach dem Oberbegriff des Anspruchs 1 sowie eine damit verwendbare Drehwahlscheibe nach dem Oberbegriff des Anspruchs 6.

Derartige bekannte Drehpositionssensoren arbeiten z. B. mit Drehwahlscheiben, auf die ein Permanentmagnet montiert ist, dessen Magnetfeld mittels der Drehwahlscheibe relativ zu einem feststehenden magnetfeldempfindlichen Sensor, wie z. B. ein Hallsensor oder eine Feldplatte, gedreht wird.

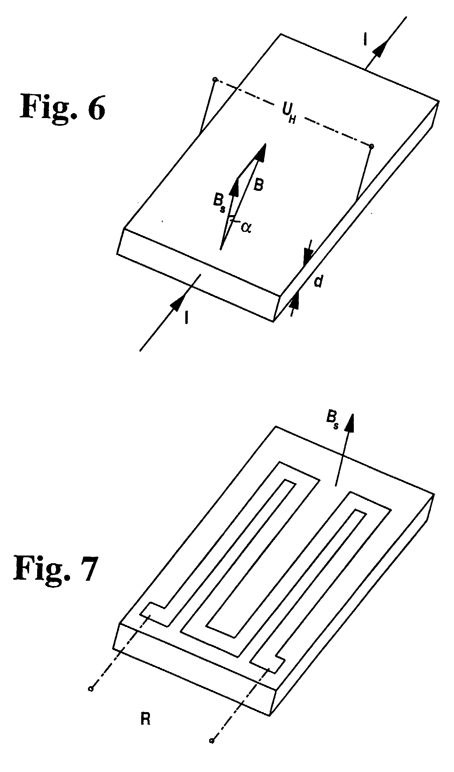

Bei einem Hallsensor (vgl. Fig. 6) werden dabei in einem streifenförmigen Leiter der Dicke d, durch den ein Längsstrom I fließt, aufgrund der durch das einwirkende Magnetfeld bewirkten Lorentzkraft $F_L$ die für die Stromleitung in Längsrichtung verantwortlichen Ladungsträger in Querrichtung abgedrängt. Dabei entsteht eine zur Vertikalkomponente $B_s$ des magnetischen Flußdichtevektors **B** proportionale Hall-Spannung $U_H$ zwischen den Querseiten des Leiters, welche durch folgende Gleichung (1) beschrieben wird:

$$U_H \sim \frac{I \bullet B_s}{d}$$

Die Hall-Spannung $U_H$ ist somit abhängig vom Betrag des magnetischen Flußdichtevektors **B** und dessen Orientierung (Winkel $\alpha$) relativ zur Richtung des Stromflusses I.

Bei Feldplatten (vgl. Fig. 7) wird die Abhängigkeit des Widerstands in Längsrichtung eines Halbleiterstreifens von der magnetischen Flußdichte **B** eines extern angelegten Magnetfelds ausgenutzt. Die erzielbare Widerstandsänderung $\Delta R/Ro$ ist dabei proportional zum Quadrat der Vertikalkomponente $B_s$ der magnetischen Flußdichte **B**, und es gilt die folgende Gleichung (2):

$$\Delta R/R_0 \sim B_s^2$$

Sowohl bei der Verwendung von Hall-Sensoren als auch bei der Verwendung von Feldplatten in Drehsensoren ergibt sich somit einerseits eine starke Abhängigkeit von der Orientierung des Magnetfelds relativ zum Sensor, andererseits aber auch eine starke Abhängigkeit vom Betrag des Magnetfelds.

Dies macht derartige bekannte Sensoren sehr empfindlich gegenüber Schwankungen der magnetischen Flußdichte oder Abweichungen derselben von einem vorgegebenen Sollwert. Solche Schwankungen oder Abweichungen können z. B. auf wärmeausdehnungs- und damit temperaturbedingten Abstandsänderungen zwischen Magnet und Sensor beruhen, oder aber auch auf Positionierungsfehlern bei der Justage des Sensors relativ zum Permanentmagneten. Bei der Serienfertigung von Drehpositionssensoren, in denen magnetfeldempfindliche Sensoren vorbestimmte Signalgrößen zur Auslösung bestimmter Steuerungsvorgänge liefern sollen, stellt sich zudem daß Problem, daß es zu fertigungsbedingten Streuungen der Sensoreinbauposition kommen kann.

Kommt es zu temperaturbedingten, justagefehlerbedingten oder serienfertigungstechnischbedingten Abweichungen des Abstands zwischen Sensor und Permanentmagnet von einem vorgegebenen Sollwert, so ändert sich die gemäß Gleichungen (1) bzw. (2) zu ermittelnde Meßgröße, also die Hall-Spannung oder die Widerstandsänderung einer Feldplatte, in empfindlicher Weise. Dieser Effekt kann dabei in der Praxis so groß werden, daß er Änderungen der gemäß Gleichung (1) oder (2) zu ermittelnden Meßgrößen, welche durch die Drehung des Magneten relativ zur aktiven Sensorfläche bedingt sind, so verfälscht, daß ein bekannter Drehpositionssensor nach dem Oberbegriff des Anspruchs 1 nicht mehr mit gewünschter Meßgenauigkeit arbeitet.

Der vorliegenden Erfindung liegt deshalb das Problem zugrunde, einen Drehpositionssensor nach dem Oberbegriff des Anspruchs 1 so zu modifizieren, daß die Empfindlichkeit des Meßsignals gegenüber Temperaturschwankungen und Justagefehler deutlich verringert wird, und gleichwohl eine ausreichende Empfindlichkeit gegen eine durch Drehung des Drehwahlschalters relativ zur aktiven Sensorfläche bedingte Meßgrößenänderung erzielt wird.

Diese Aufgabe wird durch die Maßnahmen im kennzeichnenden Teil des unabhängigen Anspruchs 1 gelöst.

Die abhängigen Ansprüche 2 bis 5 betreffen vorteilhafte Ausführungsformen eines erfindungsgemäßen Drehpositionssensors.

Weitehin liegt der Erfindung die Aufgabe zugrunde, eine mit einem erfindungsgemäßen Drehwahlpositionssensor verwendbare bekannte Drehwahlscheibe nach dem Oberbegriff des Anspruchs 6 so weiterzuentwickeln, daß sie eine Optimierung der Winkelauflösung des Meßsignals im Bereich von 0° bis 360° ermöglicht.

Diese Aufgabe wird durch die Maßnahmen im kennzeichnenden Teil des unabhängigen Anspruchs 6 gelöst.

Die abhängigen Ansprüche 7 und 8 betreffen vorteilhafte Ausführungsformen einer solchen Drehwahlscheibe.

Der erfindungsgemäße Drehpositionssensor nach Anspruch 1 umfaßt eine Drehwahlscheibe, auf der ein Magnet, bevorzugterweise ein Permanentmagnet, angebracht ist, wobei mit der Drehung der Drehwahlscheibe die Orientierung des durch den Magneten erzeugten Magnetfelds relativ zu einem Sensor verändert wird und durch den Sensor ein von der Orientierung des Magnetfelds relativ zum Sensor abhängiges elektrisches Signal erzeugt wird, wobei der Sensor ein GMR (giant magneto resistance)-Sensor ist.

Der physikalische Effekt des "giant magneto resistance" GMR beruht auf einer sehr starken Widerstandsänderung (in der Größenordnung von bis zu 70% bei Raumtemperatur) von ultradünnen ferromagnetischen Schichtsystemen in einem externen Magnetfeld, wie er z. B. von Baibich et. al. im Jahre 1988 gefunden wurde.

Dabei kommt es an ultradünnen Viellagenschichten bestehend aus ferromagnetischen Metallen (z. B. Fe) getrennt durch Zwischenlagen nichtmagnetischer Metalle (z. B. Cr) mit Schichtdicken in der Größenordnung von typischerweise 1 nm zu einer antiferromagnetischen Kopplung der ferromagnetischen Lagen über die nichtmagnetischen Zwischenlagen hinweg. Dies führt zu einer unterschiedlichen Streuung von für die Stromleitung durch die Viellagenschicht verantwortlichen und sich in einem äußeren Magnetfeld mit parallelem Spin oder antiparallelem Spin einstellenden Elektronen.

Sind in einem Grundzustand ohne äußeres Magnetfeld die einzelnen ferromagnetischen Lagen antiparallel magnetisiert, so kommt es zu einem hohen Widerstand des Schichtsystems. Wird durch ein von außen angelegtes Magnetfeld ein Zustand paralleler Magnetisierung der einzelnen ferromagnetischen Schichten erzwungen, so sinkt jedoch der Widerstand des Schichtsystems.

Solche GMR-Schichten zeigen den Effekt, daß die Widerstandsänderung ΔR/Ro, d. h. die relative Änderung des Widerstands bei Anlegen eines äußeren Magnetfelds, nur relativ schwach abhängig ist vom Absolutbetrag eines äußeren Magnetfelds, jedoch vom Einstellwinkel des äußeren Magnetfelds, genauer gesagt von der Projektion des äußeren lokalen Magnetfelds relativ zu einer Vorzugsrichtung in den Sensorschichten, in etwa linear abhängig ist. Ein GMR-Sensor ist somit im wesentlichen ein feldrichtungsabhängiger und erst in zweiter Linie ein feldstärkeabhängiger Sensor.

Auch wenn man in einem Drehpositionssensor nach Anspruch 1 einen Magneten verwendet, der im Bereich der aktiven Sensorfläche des eingebauten GMR-Sensors kein exakt homogenes Magnetfeld erzeugt, und es somit durch temperaturausdehnungs- oder justagefehlerbedingte Abweichungen des Abstands zwischen Sensor und Magnet von einer gewünschten Normlage zu Änderungen der Magnetfeldstärke im aktiven Sensorbereich kommt, so ändert sich die in einem GMR-Sensor auftretende Widerstandsänderung bei Beibehaltung der Ausrichtung des Sensors relativ zum lokalen Magnetfeld innerhalb relativ breiter Toleranzgrenzen bezüglich lateraler Verschiebungen praktisch nicht.

Dadurch werden mit einem GMR-Sensor die oben beschriebenen temperaturbedingten oder justagefehlerbedingten Meßstörungen bei der Bestimmung des Einstellwinkels eines Drehschalters relativ zum Meßsensor erfolgreich vermieden.

Weiterhin zeigen heute bekannte GMR-aktive Sensormaterialien die für den praktischen Einsatz äußerst wichtige Eigenschaft, daß der GMR-Effekt auch bei Zimmertemperatur und selbst bis zu ca. 150 ° C zuverlässig auftritt.

Bei der Verwendung der erfindungsgemäßen Drehwahlschalter nach Anspruch 1 oder 2 stellt sich in der Praxis, insbesondere bei deren Verwendung zur Regelung der Ablaufprogramme bei Waschmaschinen, Geschirrspülmaschinen oder ähnlichen Haushaltsgeräten, der Wunsch, auf einer Drehwahlscheibe wohldefinierte Rastpositionen vorzusehen, an denen jeweils ein drehwinkelstellungstypisches Meßgrößensignal abgegriffen wird, welches einen zugeordneten Programmablauf initiiert. Um ein sicheres Schaltgefühl und generell eine für den Benutzer als angenehm und übersichtlich empfundene Schalthaptik zu ermöglichen, sollte dabei der Abstand zwischen einzelnen Rastpositionen bzw. Programmstartpunkten auf einer Drehwahlscheibe möglichst groß sein.

Für eine vorgegebene Drehpositionsanordnung nach Anspruch 1 oder 2, mit einem um beliebige Vielfache von 360° frei verdrehbaren Drehwahlschalter, sollte hierbei idealerweise das gesamte Drehwinkelintervall von 0° bis 360° zur Anordnung von Rastpositionen ausgenutzt werden können.

Hierbei tritt bei einem Drehpositionssensor, der einen GMR-Sensor verwendet, jedoch aufgrund der Symmetrie der Projektion des lokalen Magnetfelds relativ zu einer Vorzugsrichtung eine Wiederholung der im Drehwinkelintervall 0° bis 180° erzielten Meßgröße $\Delta R/R_0$ im Intervall 180° bis 360° auf.

Hier schafft ein Drehpositionssensor nach den abhängigen Ansprüchen 3 bis 5 Abhilfe. Durch die dort angegebenen Maßnahmen der bezüglich einer ausgezeichneten Drehwinkelstellung asymmetrischen Anordnung von Rastpositionen des Drehpositionssensors ist es möglich, das gesamte Drehwinkelintervall von 0° bis 360° zur eineindeutigen Meßsignalermittlung optimal auszunutzen.

Besonders hervorzuheben ist dabei, daß diese Anordnung mit einem einzigen GMR-Sensor auskommt und dennoch eine optimale Winkelauflösung im Bereich von 0° bis 360° ermöglicht. Dadurch erübrigen sich apparativ aufwendigere Lösungen, bei denen mehr als ein einzelner GMR-Sensor zur eindeutigen Winkelermittlung (z. B. über Phasendetektion) verwendet werden.

Weiterhin wird gemäß der abhängigen Ansprüche 3 bis 5 ein Drehpositionssensor mit einem einzelnen GMR-Sensor zur Verfügung zu gestellt, welcher insbesondere eine für den alltäglichen Gebrauch ausreichende Bedienungsfreundlichkeit und eine vom Benutzer beim Schalten als angenehm empfundene Schalthaptik aufweist.

Es sei ausdrücklich betont, daß eine Drehwahlscheibe mit den Merkmalen der des Ansprüche 6 bis 8 auch unabhängig von einem GMR-Sensor immer dann verwendbar ist, wenn es darum geht, Signale von Sensoren im Bereich von 0° bis 360° eindeutig (d.h. eindeutig im Sinne einer mathematischen Umkehrfunktion) aufzulösen, selbst dann wenn sich das vom Sensor im Bereich von 0° bis 180° gelieferte Signal im Bereich von 180° bis 360° wiederholt.

Die Vorteile und Merkmale der vorliegenden Erfindung ergeben sich auch in Verbindung mit den Ausführungsbeispielen und Zeichnungen.

Es zeigen:

Fig. 1      den schematischen Aufbau eines erfindungsgemäßen Drehpositionssensors;

Fig. 2      ein Diagramm, welches die axiale und laterale Justagetoleranz der Auswertungssignale eines GMR-Sensors zeigt;

Fig. 3      ein Diagramm, welches die aufgrund der Symmetrie der Projektion des lokalen Magnetfelds auf einen ausgezeichneten Durchmesser der Drehwahlscheibe bedingte Wiederholung von im Intervall [0, 180°] mit einem erfindungsgemäßen Drehpositionssensor erzielbaren Meßwerten im Intervall [180°, 360°] veranschaulicht;

Fig. 4      die Lage der Rastpositionsstellungen einer in einem erfindungsgemäßen Drehpositionssensor verwendbaren erfindungsgemäßen Drehwahlscheibe, mit der es möglich ist, im Drehwinkelintervall [0, 180°] andere diskrete Meßwerte als im Drehwinkelintervall [180°, 360°] zu erzielen;

Fig. 5      ein Diagramm, welches die mit der in Fig. 4 gezeigten Drehscheibe in den Intervallen [0, 180°] und [180°, 360°] erzielbaren Meßwerte veranschaulicht;

Fig. 6      Aufbau und Funktionsweise eines bekannten Hall-Sensors; und

Fig. 7      Aufbau und Funktionsweise einer bekannten Feldplatte.

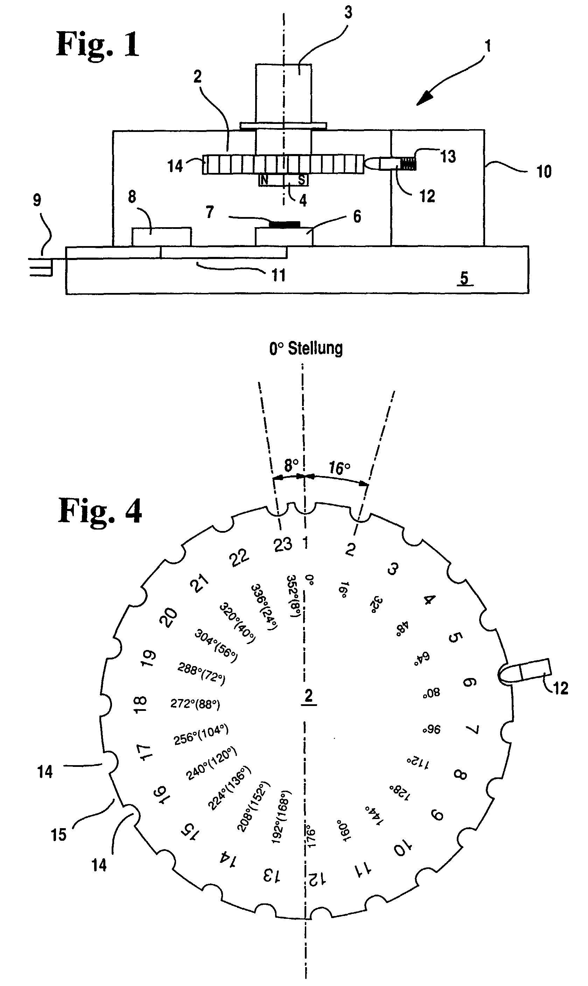

Fig. 1 zeigt den schematischen Aufbau eines erfindungsgemäßen Drehpositionssensors 1 im Querschnitt. Dabei ist eine Drehwahlscheibe 2 gezeigt, die auf einer Drehachse 3 drehbar gelagert ist. Achsmittig aufgebracht ist ein Permanentmagnet 4, der im umgebenden Raum ein Magnetfeld erzeugt.

Unterhalb der Drehwahlscheibe ist eine Platine 5 angeordnet, auf der neben einem magnetfeldempfindlichen GMR-Sensor 6 eine Auswerteelektronik 8 angebracht sind, die vom GMR-Sensor 6 über Leitungen 11 gelieferte Signale auswertet und an eine Schnittstelle 9 weiterleitet. Die Platine ist von einem Gehäuse 10 umgeben, in dem die Drehwahlscheibe 2 montiert ist.

Durch diese Bauweise ergibt sich ein kompakter und leicht zu montierender Aufbau.

Der beispielsweise stabförmige Permanentmagnet 4 erzeugt im Bereich der aktiven Sensorfläche 7 des GMR-Sensors 6 ein nur annäherungsweise homogenes Magnetfeld.

Das Drehwahlscheibe 2 ist in Fig. 1 als Rastrad dargestellt, welches längs seines Umfangs mit Einkerbungen 14 versehen ist, welche Rastpositionen festlegen, in die eine Rastvorrichtung in Form eines durch eine Feder 13 gegen die Umfangswand der Drehwahlscheibe 2 gedrückten Stößels 12 eingreifen kann. Beim Drehen der Drehwahlscheibe 2 ergeben sich dadurch wohldefinierte diskrete Rastpositionen.

Bei dem Stößel 12 kann es sich beispielsweise um den Stößel eines Mikroschalters (nicht gezeigt) handeln, der sich in einem ersten Schaltzustand (beispielsweise geschlossen) befindet, wenn der Stößel 12 in einer Einkerbung 14 ruht, und in einem zweiten Schaltzustand (beispielsweise geöffnet) befindet, wenn der Stößel 12 durch den hervorstehenden Umfangsabschnitt 15 (vgl. Fig. 4) zwischen zwei Einkerbungen 14 gegen die Feder 13 zurückgetrieben wird. Wird der Schaltzustand des mit dem Stößel 12 verbundenen Mikroschalters abgefragt und mit dem Signal des GMR-Sensors in einem "UND-Gatter" oder einer anderen geeigneten Auswertungselektronik verknüpft, so kann man es erreichen, daß nur die an den durch die Einkerbungen 14 festgelegten diskreten Rastpositionen erzeugten drehwinkelsensitive Signale der Widerstandsänderung des GMR-Sensors 6 ausgewertet werden.

Der erfindungsgemäße Drehsensor 1 arbeitet dadurch als kontaktloses Potentiometer mit diskreten Rastpositionen.

Dabei ergibt sich, daß aufgrund der Stärke des GMR-Effekts ein großes Signal auch in relativ großen Abständen vom ansteuernden Feld zur Verfügung steht.

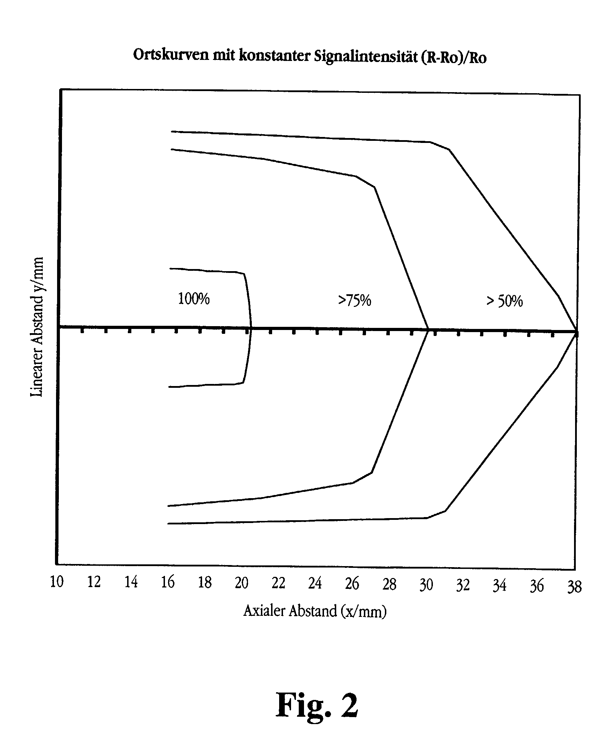

In Fig. 2 ist die axiale und laterale Justagetoleranz von Auswertungssignalen zu sehen, die an einem in Fig. 1 dargestellten GMR-Sensor aufgenommen wurden. Dabei war der aktive Bereich eines GMR-Sensors zunächst exakt mittig unter der in Fig. 1 zu sehenden Drehachse des Drehwahlschalters 2 in einem axialen Abstand von 16 mm vom Ende des Magneten 4 angebracht. Sodann wurde die Drehscheibe und damit das Magnetfeld relativ zur Sensorfläche so verdreht, daß ein Meßsignal maximaler Größe auftrat. Das dort ermittelte Signal des GMR-Sensors wurde gleich 100% gesetzt.

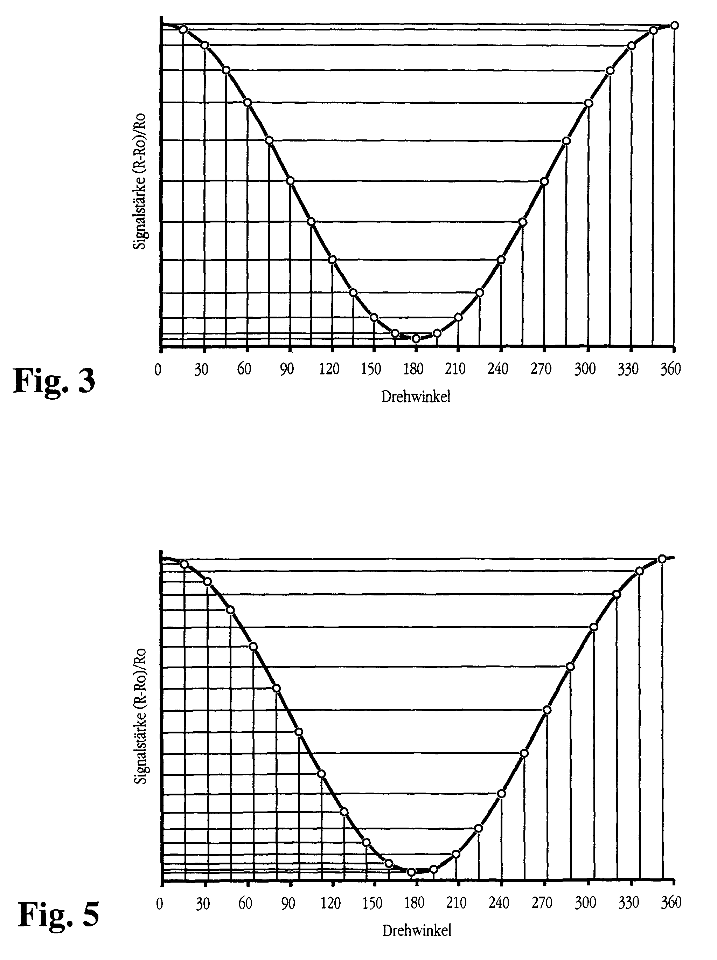

Sodann wurde der aktive Bereich 7 des GMR-Sensors 6 in axialer und lateraler Richtung bewegt und die dabei aufgenommenen Meßsignale mit dem Ausgangswert verglichen. Hierbei ergaben sich die in Fig. 3 gezeigten Ortskurvenzüge mit konstanter Signalstärke. Alle von den Schenkeln einer mit "100%", ">75%" und ">50%" gezeichneten Ortskurve eingeschlossenen Punkte zeigen eine Signalstärke von 100%, größer als 75% bzw größer als 50% gegenüber dem Vorgabewert.

Aus Fig. 2 wird ersichtlich, daß die erfindungsgemäßen Drehpositionssensoren innerhalb bestimmter Bereiche des Abstands zwischen aktiver Sensorfläche und Permanentmagnet praktisch keine Signalverluste zeigen, und somit sehr unempfindlich sind gegen Justagefehler.

Daraus ergibt sich zusammenfassend, daß die erfindungsgemäßen Drehpositionssensoren Feldrichtungssensoren sind, die eine relativ geringe Empfindlichkeit gegen laterale und axiale Justagefehler zeigen, jedoch auf Änderungen der Orientierung zwischen Magnetfeld und Sensorfläche stark ansprechen.

Fig. 3 zeigt ein Diagramm, welches den Signalverlauf eines erfindungsgemäßen erfindungsgemäßen Drehpositionssensors unter Verwendung eines GMR-Sensors im Intervall [180°, 360°] veranschaulicht. Dabei ist die Widerstandsänderung $\Delta R/Ro$ als Funktion des Winkels zwischen dem Permanentmagneten 4 und dem GMR-Sensor 6 aufgezeichnet.

Ausgehend von der maximalen Signalintensität ergibt sich bei zunehmenden Drehwinkel zwischen Permanentmagnet und aktiver Sensorfläche eine Abnahme der Signalintensität in Form einer cosinusähnlichen Kurve bis hin zu einem minimalen Wert bei einem Drehwinkel von 180°. Von dieser Stellung mit minimaler Signalintensität an steigt das Signal wiederum auf seinen maximalen Wert bei einem Drehwinkel von 360°. Der Signalverlauf zeigt eine Symmetrie zur Minimallage bei 180°. Zur besseren Verdeutlichung dieses Sachverhalts sind diskrete Meßpunkte in einem Abstand von jeweils 15° eingezeichnet. Es wird bei einem Drehwinkel von z. B. 30° im Uhrzeigersinn derselbe Signalwert erzielt wie bei einem Drehwinkel von 330° im Uhrzeigersinn (= 30° gegen den Uhrzeigersinn), d. h. eine Winkeleinstellung $\alpha$ ist nicht von 360°-$\alpha$ zu unterscheiden.

Ein möglicher Einsatzbereich der erfindungsgemäßen Drehpositionsschalter liegt in der Steuerungstechnik, wobei die Stellung des Drehpositionsschalters und die dadurch ausgelöste Signalintensität als auslösende Größe für bestimmte Programmabläufe verwendet werden kann. Ein bevorzugtes Einsatzgebiet ist z. B. in der Steuerung von Programmabläufen an Waschmaschinen oder Geschirrspülautomaten, wo über einen um 360° frei drehbaren Drehwahlschalter bestimmte Programmabläufe für die durchzuführenden Wasch- bzw. Spülvorgänge ausgelöst werden sollen.

Dabei stellt sich die Forderung, daß einerseits möglichst viele Programmablaufpunkte auf einer Drehwahlscheibe unterzubringen sind, andererseits aus Gründen der Schalthaptik jedoch die einzelnen Programmablaufpunkte möglichst weit voneinander entfernt liegen sollen. Dies führt in der Praxis zu dem Wunsch, bei einem um 360° frei drehbaren Drehwahlschalter möglichst den gesamten Winkelbereich mit Programmschaltpunkten belegen zu können.

Wegen der in Verbindung mit Fig. 3 oben diskutierten Problematik der Symmetrie der Signalintensität in Abhängigkeit vom Drehwinkel eines erfindungsgemäßen Drehpositionssensors ist es hierbei jedoch notwendig, zu vermeiden, daß im im Intervall [180°, 360°] dieselben Drehwinkel eingestellt werden wie im Intervall [0°, 180°].

Dies wird durch die Verwendung einer in Fig. 4 gezeigten Drehwahlscheibe mit Rastkerben 14 erreicht. Die Drehwahlscheibe kann man sich durch eine in der Scheibenebene verlaufende Vorzugsrichtung (durch die Mitte der Rastkerbe "1", , d.h. die 0°-Stellung, verlaufender Scheibendurchmesser) in zwei Hälften, nämlich eine linke und eine rechte, geteilt denken. In der linken und rechten Hälfte der Drehwahlscheibe liegt je eine Gruppe von Rastkerben, die innerhalb der linken oder rechten Gruppe jeweils denselben Winkelabstand (16° in Fig. 4) aufweisen. Dabei sind die Rastkerben in der rechten Hälfte aber etwas versetzt zu den Rastkerben in der linken Hälfte angeordnet, d.h. die einzelnen Rastkerben sind nicht achssymmetrisch relativ zur Vorzugsrichtung angeordnet

Oder mit nochmals anderen Worten kann man auch sagen: Keine der Rastkerben in der rechten Hälfte kann durch Achsspiegelung an der Vorzugsrichtung (0°-Durchmesser) mit einer in der linken Hälfte liegenden Rastkerbe zur Deckung gebracht werden.

Insbesondere ist die in Fig. 4 gezeigte Anordnung so gewählt, daß folgende Beziehung erfüllt ist:

$$X = 360°/(Y - 0.5) \qquad (3)$$

bzw.

$$X \cdot Y - X \cdot 0{,}5 = 360° \qquad (4)$$

wobei

X = Winkelinkrement zwischen aufeinanderfolgenden Raststellungen
Y = Gesamtzahl der gewünschten Raststellungen im Bereich 0 bis 360°

Dadurch werden z. B. auf einem Vollkreis von 360° (beginnend bei einer Winkelstellung von 0° und im Uhrzeigersinn) insgesamt Y jeweils in einem Abstand von X Grad zueinander angeordnete Rastpositionen angebracht, wobei die letzte Rastposition im Abstand eines halben Winkelinkrements (X·0,5) im Gegenuhrzeigersinn von der Nullstellung bei 0° entfernt liegt.

In dem in Fig. 4 gezeigten Beispiel ist Y=23 gewählt. Dadurch ergibt sich X=16°. Wie in Fig. 4 gezeigt ist dadurch eine Anordnung von 23 Rastpositionen (Einkerbungen 14) längs des Umfangs einer Drehwahlscheibe 2 anzubringen, die bei 0° (Position "1") beginnend bis zur Stellung bei 352° (Position "23") jeweils mit einem Winkelinkrement von 16° zueinander beabstandet angebracht sind. Zwischen der letzten Einkerbung (Position "23" bei 352°) und der ersten Einkerbung (Position "1" bei 0°) verbleibt jedoch nur ein halbes Winkelinkrement von 8°.

Man kann sich die in Fig. 5 gezeigte Anordnung von Rastpositionen auch so angeordnet vorstellen, daß man sie in zwei Gruppen (1. bis 12. sowie 13. bis 23 Einkerbung) aufgeteilt denkt, wobei die erste Gruppe bei der Winkelstellung 0° beginnend in einem Winkelinkrement von 16° im Uhrzeigersinn von der 1. bis zur 12. Einkerbung läuft, und die zweite Gruppe bei der um 8° gegen den Uhrzeigersinn aus der Winkelstellung 0° verdrehten Position "23" (d. h. bei 352 im Uhrzeigersinn gemessen) beginnt und in einem Winkelinkrement von 16° gegen den Uhrzeigersinn bis zur Position "13" (d. h. bei 192° im Uhrzeigersinn bzw. 168° gegen den Uhrzeigersinn gemessen) läuft.

Dadurch wird eine Anordnung erzielt, bei der alle 23 Schaltpositionen unter optimaler Ausnutzung des Winkelbereichs von 0° bis 360° möglichst weit voneinander beabstandet sind, und sich dennoch die in der rechten Hälfte der Drehwahlscheibe im Uhrzeigersinn und in der linken Hälfte der Drehwahlscheibe gegen den Uhrzeigersinn gemessenen Drehwinkel unterscheiden. So ist eine von der Projektion einer Richtung auf einen ausgezeichneten Durchmesser der Drehwahlscheibe abhängige Meßsignalgröße, wie z.B. die der Widerstandsänderung eines GMR-Sensors relativ zu einem äußeren, dem Betrag nach homogenen, aber relativ zum Sensor frei drehbaren Magnetfeld, im Drehwinkelintervall 0° bis 180° von der Meßsignalgröße im Drehwinkelintervall 180° bis 360° optimal zu unterscheiden.

Selbstverständlich können zur Unterscheidung der im Drehwinkelintervall 0° bis 180° erzielten Widerstandsänderungen von den im Drehwinkelintervall 0° bis 360° erzielten Widerstandsänderungen auch von den obigen Gleichungen (3) und (4) abweichende Verteilungen von Rastpositionen der Drehwahlscheibe eines erfindungsgemäßen Drehpositionssensors gewählt werden, solange nur die Anordnung im Drehwinkelintervall 0° bis 180° asymmetrisch zu der Anordnung im Drehwinkelintervall 180° bis 360° bezüglich des durch die Stellung 0° verlaufenden Durchmessers ist. Weiterhin können statt einer Drehwahlscheibe mit Einkerbungen und einem darin eingreifenden Stößel selbstverständlich auch weitere geeignete Rastmittel zur Festlegung asymmetrisch verteilter Rastpositionen der Drehwahlscheibe gewählt werden.

**Patentansprüche**

1. Drehpositionssensor mit einem Sensor und einer Drehwahlscheibe, auf der ein Magnet angebracht ist, wobei mit der Drehung der Drehwahlscheibe die Orientierung des durch den Magneten erzeugten Magnetfelds relativ zum Sensor verändert wird und unter Verwendung des Sensors ein von der Orientierung des Magnetfelds relativ zum Sensor abhängiges Signal erzeugt wird,
   **dadurch gekennzeichnet,**
   daß der Sensor (6) ein GMR (giant magneto resistance)-Sensor ist.

2. Drehpositionssensor nach Anspruch 1,
   **dadurch gekennzeichnet,**
   daß der Sensor (6) zusammen mit einer Auswertungseinheit (8) auf einer Platine (5) integriert ist, welche von einem Gehäuse (10) umgeben ist, in dem die Drehwahlscheibe (2) montiert ist.

3. Drehpositionssensor nach Anspruch 1 oder 2,
   **dadurch gekennzeichnet,**
   daß die Drehwahlscheibe (2) mit Gruppen von bezüglich eines ausgezeichneten Durchmessers in Umfangsrichtung asymmetrisch zueinander angeordneten Rastmitteln (8) versehen ist, welche diskrete Rastpositionen der Drehwahlscheibe (2) definieren.

4. Drehpositionssensor nach Anspruch 3, **dadurch gekennzeichnet,** daß die Drehwahlscheibe (2) in einer jeden der beiden durch den ausgezeichneten Durchmesser definierten Scheibenhälften je eine Gruppe von längs des Scheibenumfangs in gleichmäßigen Winkelinkrementen und gleichem Abstand vom Scheibenmittelpunkt angeordnete Rastmittel (14) von jeweils gleicher Anzahl umfaßt, wobei das in der ersten Gruppe von Rastmitteln auftretende Winkelinkrement gleich dem Winkelinkrement in der zweiten Gruppe von Rastmitteln ist.

5. Drehpositionssensor nach Anspruch 4, **dadurch gekennzeichnet,** daß folgende Beziehung gilt:

$$X \cdot Y - X \cdot 0{,}5 = 360°,$$

   wobei:

   $X$ = Winkelinkrement zwischen den Stellungen zweier aufeinander folgender Rastmittel (14); und

   $Y$ = Gesamtzahl der Rastmittel (14) im Drehwinkelbereich 0° bis 360°.

6. Drehwahlscheibe (2), welche um eine senkrecht zur Ebene der Scheibenfläche verlaufende Drehachse um 360° frei drehbar ist, wobei eine Vorzugsrichtung in der Ebene der Scheibenfläche mit einem Vektor maximaler Intensität eines externen Kraftfelds zur Deckung bringbar ist, **dadurch gekennzeichnet,** daß zwei Gruppen von bezüglich der Vorzugsrichtung in der Ebene der Scheibenfläche in Umfangsrichtung asymmetrisch zueinander angeordneten Rastmitteln vorgesehen sind, d.h. daß es nicht möglich ist, den Ort eines Rastmittels in der ersten Gruppe durch Achsspiegelung an der Vorzugsrichtung mit einem Ort eines Rastmittels in der zweiten Gruppe zur Deckung zu bringen, wobei die Rastmittel diskrete Rastpositionen (14) der Drehwahlscheibe (2) definieren.

7. Drehwahlscheibe nach Anspruch 6, daß die Drehwahlscheibe (2) in einer jeden der beiden durch die Vorzugsrichtung definierten Scheibenhälften je eine Gruppe von längs des Scheibenumfangs in gleichmäßigen Winkelinkrementen und gleichem Abstand vom Scheibenmittelpunkt angeordnete Rastmittel (14) von jeweils gleicher Anzahl umfaßt, wobei das in der ersten Gruppe von Rastmitteln auftretende Winkelinkrement gleich dem Winkelinkrement in der zweiten Gruppe von Rastmitteln ist.

8. Drehwahlscheibe nach Anspruch 7 **dadurch gekennzeichnet,** daß folgende Beziehung gilt:

$$X \cdot Y - X \cdot 0{,}5 = 360°,$$

wobei:

X = Winkelinkrement zwischen den Stellungen zweier aufeinander folgender Rastmittel (14); und

Y = Gesamtzahl der Rastmittel (14) im Drehwinkelbereich 0° bis 360°.

# Fig. 1

# Fig. 4

0° Stellung

Ortskurven mit konstanter Signalintensität (R-Ro)/Ro

Fig. 2

**Fig. 3**

**Fig. 5**

**Fig. 6**

**Fig. 7**